# EUROPÄISCHE PATENTSCHRIFT

(11) **EP 4 175 909 B1**
(45) Veröffentlichungstag und Bekanntmachung des Hinweises auf die Patenterteilung: **23.09.2026**
(21) Anmeldenummer: 21739269.5
(22) Anmeldetag: 21.06.2021
(51) Int. Cl.: C01B 3/38, C03B 5/237, C21B 13/00, F27D 17/10

(54) **VERFAHREN UND VORRICHTUNG ZUR RÜCKGEWINNUNG VON INNERER ENERGIE AUS ABGASEN**
METHOD AND DEVICE FOR HARVESTING INNER ENERGY FROM EXHAUST GASES
PROCÉDÉ ET DISPOSITIF DE COLLECTE D'ÉNERGIE INTERNE À PARTIR DE GAZ D'ÉCHAPPEMENT

(30) Priorität: 04.07.2020 DE 102020004045
(43) Veröffentlichungstag der Anmeldung: 10.05.2023
(73) Patentinhaber: Messer Austria GmbH, 2352 Gumpoldskirchen (AT)
(72) Erfinder: DEMUTH, Martin, 2353 Guntramsdorf (AT); SPOLJARIC, Davor, 2103 Langenzerdorf (AT); HOCHENAUER, Christoph, 8200 Eggersdorf bei Graz (AT); GABER, Christian, Erich, 2352 Gumpoldskirchen (AT); WACHTER, Philipp, 8012 Graz (AT)
(74) Vertreter: Münzel, Joachim R.
(86) Internationale Anmeldenummer: PCT/EP2021/066856
(87) Internationale Veröffentlichungsnummer: WO 2022/008222

(56) Entgegenhaltungen:
- EP-A1- 3 336 430
- EP-A1- 3 447 025
- US-A1- 2016 186 992
- US-A1- 2019 316 040
- US-B1- 6 210 157

## Beschreibung

Die Erfindung betrifft ein Verfahren zum Rückgewinnen von innerer Energie aus heißen Abgasen, bei dem ein Kohlenwasserstoff enthaltender Brennstoff und Wasserdampf einem Reformer zugeführt wird, in welchem in einer endothermen Reformierungsreaktion ein Kohlenmonoxid und Wasserstoff enthaltendes Synthesegas erzeugt wird, das Synthesegas anschließend einem Ofen zugeführt wird, in dem es mit einem sauerstoffhaltigem Oxidationsmittel verbrannt wird, wobei ein heißes, Kohlendioxid und Wasserdampf enthaltendes Abgas entsteht, und die im Abgas enthaltene innere Energie zumindest teilweise zur Durchführung der endothermen Reformierungsreaktion im Reformer genutzt wird. Die Erfindung betrifft des Weiteren eine entsprechende Vorrichtung.

Bei Verbrennungsprozessen in industriellen Ofenanlagen entstehen heiße Verbrennungsprodukte, die in der Regel als Rauch- oder Abgase abgeführt werden. Die in den Rauchgasen enthaltene innere Energie wird dabei ungenutzt an die Umgebung abgegeben. Um wenigstens einen Teil der Wärmeenergie rückgewinnen zu können und damit den feuerungstechnischen Wirkungsgrad der Ofenanlage zu steigern, sind bereits verschiedene Ansätze entwickelt worden.

Einer dieser Ansätze besteht darin, die dem Ofen zugeführten Brennstoffe und Oxidationsmittel durch Wärmetausch mit den aus dem Ofen abströmenden Rauchgasen vorzuwärmen. Die Wärme kann dabei insbesondere in Regeneratoren zurückgewonnen werden, die abwechselnd vom heißen Rauchgas und anschließend vom Oxidationsmittel, bzw. Brennstoff durchströmt werden. Das Rauchgas gibt dabei einen Teil seiner Wärme an einen Wärmespeicher im Regenerator ab, der diese zwischenspeichert und anschließend wiederum an das Oxidationsmittel, bzw. den Brennstoff abgibt. Üblicherweise kommen dabei mindestens zwei Regeneratoren zum Einsatz, die wechselweise betrieben werden, sodass stets ein Regenerator zum Aufnehmen der Wärme aus dem Rauchgas und ein zweiter Regenerator zum Aufheizen des Oxidationsmittels, bzw. Brennstoffs zum Einsatz kommt.

Während dieses Verfahren häufig dann angewandt wird, wenn als Oxidationsmittel Luft zum Einsatz kommt und/oder hohe Abgastemperaturen von mehr als 1300°C, bzw. eine hohe Beladung von Staub und aggressiven Komponenten vorliegen, bringt es in Anlagen, in denen ein Brennstoff mit reinem Sauerstoff verbrannt wird (Oxyfuel-Anlagen), erhebliche verfahrenstechnische Schwierigkeiten mit sich. Einerseits kann aufgrund der unterschiedlichen Wärmekapazitäten, sowie der deutlich geringeren Volumenströme, nur eine relativ geringe Wärmemenge aus dem Abgas zurückgewonnen werden, und zum anderen wird das Material durch den erwärmten Sauerstoff sehr stark oxidierend belastet. Zusätzlich ist die Vorwärmtemperatur von Sauerstoff auf ca. 650 °C limitiert, was dazu führt, dass mit einer konventionellen Abgaswärmerückgewinnung lediglich eine relativ geringe prozentuale Erhöhung des feuerungstechnischen Wirkungsgrades erzielt werden kann. Bei methanhaltigen Brennstoffen tritt zudem unerwünschte Methanspaltung auf.

Beim sogenannten TCR-Verfahren (Thermo-Chemische Regeneration/ Rekuperation), wie es beispielsweise in der EP 0 953 543 A1 beschrieben wird, wird dieses Problem insofern umgangen, als das Abgas von mit Sauerstoff als Oxidationsmittel betriebenen Ofenanlagen nicht nur zur Vorwärmung der Edukte im Ofen, sondern teilweise zur internen Reformierung des Brennstoffs herangezogen wird.

Für einen kontinuierlichen regenerativen TCR-Betrieb ist ein Ofen üblicherweise mit mindestens zwei Reaktoren verbunden, die jeweils nacheinander als Reformer und als Regenerator arbeiten und nach festgelegten Zeitabständen ihre Betriebsweise derart wechseln, dass sich ein erster Reaktor immer in einer Regenerationsphase (Heizphase) und ein zweiter Reaktor in einer Reformierungsphase befindet. Die Regenerationsphase läuft dabei wie in herkömmlichen Regeneratoren ab, indem das heiße Abgas aus dem Ofen einen Teil der Wärme auf einen Wärmespeicher (Regenerationsbett) des ersten Reaktors überträgt. Das Abgas wird dabei abgekühlt und verlässt anschließend den Reaktor. Ein Teil des Abgases wird in der Folge abgezweigt und mit einem kohlenwasserstoffhaltigen Brennstoff (z.B. CH₄) gemischt. Der nicht rezirkulierte Abgasanteil verlässt das System über eine entsprechende Abgasleitung. Das rezirkulierte Abgas und der Brennstoff werden als Gemisch oder in getrennten Zuleitungen dem zweiten Reaktor (Reformer) zugeführt, der im vorangegangenen Zyklus durch die heißen Abgase erwärmt wurde und in dem nun die Reformierungsphase eingeleitet wird. Dabei erfolgt eine chemische Umwandlung (Reformierung) des Brennstoffes mit Wasserdampf und Kohlendioxid zu einem Kohlenmonoxid und Wasserstoff enthaltenden Synthesegas, das anschließend im Ofen mit Sauerstoff verbrannt wird. Da das bei der Verbrennung des Synthesegases im Ofen entstehende Abgas zum Großteil aus Wasserdampf und Kohlendioxid besteht, wird dieses in einem Teilstrom dem Reformer zurückgeführt und direkt für die Reformierung herangezogen.

Bei der Reformierung von Methan mit einem rezirkulierten Teilstrom des Ofenabgases läuft im Reformer im Wesentlichen die sogenannte Dampf- und Trockenreformierung ab. Deren Reaktionen sind sehr stark endotherm und benötigen hohe Temperaturen und geringe Drücke, um das Gleichgewicht auf die Seite der Produkte zu legen und damit eine hohe Produktionsausbeute erzielen zu können:

| | | |
|---|---|---|
| (a) | CH₄ + H₂O ⇆ CO + 3H₂ | ΔH⁰_{R} = +206,3 MJ/kmol |
| (b) | CH₄ + CO₂ ⇆ 2CO + 2H₂ | ΔH⁰_{R} = +247,3 MJ/kmol |

Die Zusammensetzung des reformierbaren Brennstoff-Abgas-Gemisches ermöglicht im Fall von reinem Methan als Brennstoff bei einer Abgasrezirkulation von 25% eine vollständige (stöchiometrische) Umwandlung zu Synthesegas. Die Reaktionsgleichung der ablaufenden, auch als "Bi-Reformierung" bezeichneten chemischen Brutto-Reaktion lautet, modellhaft für eine Oxyfuel-Verbrennung ohne Luftüberschuss:

| | | |
|---|---|---|
| (c) | ${CH}_{4} + \frac{1}{3} {CO}_{2} + \frac{2}{3} {H}_{2} O {←}_{\to } \frac{4}{3} CO + \frac{8}{3} {H}_{2}$ | ΔH⁰_{R} = +220,0 MJ/kmol |

Nur bei Öfen mit hinreichend hohen Abgastemperaturen reicht jedoch die im Abgas enthaltene innere Energie unter optimalen Bedingungen aus, um eine zumindest nahezu vollständige Umwandlung des Brennstoffs in Synthesegas sicherzustellen. Bei zu geringen Abgastemperaturen wird nur ein Teil des Brennstoffs reformiert.

Im teilreformierten Bereich fällt bei geringeren Reaktionstemperaturen aufgrund der entsprechenden chemischen Gleichgewichtszustände fester Kohlenstoff an, der sich insbesondere an der Oberfläche des Katalysators anlagern und die Betriebsfähigkeit des Reaktors beeinträchtigen kann. Um derartige Kohlenstoffablagerungen zu vermeiden, wird in der EP 0 953 543 A1 vorgeschlagen, im Anschluss an die Reformierungsphase und noch vor der Regenerationsphase den für die Verbrennung des Synthesegases benötigten Sauerstoff zumindest teilweise durch den Reaktor zu leiten, um damit die Kohlenstoffablagerungen auszubrennen. Das Abbrennen des Kohlenstoffs führt jedoch zu einem zusätzlichen Verfahrensschritt und damit zu einer Verzögerung des Verfahrensablaufs. Zudem kommt es beim Durchleiten von hochreinem Sauerstoff aufgrund der Reaktion mit dem Kohlenstoff lokal zu unerwünscht hohen Temperaturen im Reaktor, denen dadurch begegnet werden muss, dass dem zugeführten Sauerstoff Abgas aus dem Verbrennungsprozess beigemischt wird, wodurch die Effizienz des Verfahrens sinkt.

Aus der DE 10 2016 015 012 A1 ist ein Verfahren zur Wärmerückgewinnung aus einem von einem Brenner erzeugten Rauchgas bekannt, bei dem das Rauchgas zumindest teilweise rezirkuliert wird. Das Rauchgas wird dabei als Reformierungsedukt zusammen mit einem Brennstoff einem Reformer zugeführt und mit Hilfe der aus dem Rauchgas übertragenen inneren Energie in einer Reformierungsreaktion zu einem Synthesegas umgesetzt. Das Synthesegas wird anschließend im Brenner unter Entstehung von Rauchgas verbrannt. In einer speziellen Ausgestaltung dieses Verfahrens ist vorgesehen, einen weiteren Teil der thermischen Energie des Rauchgases dazu zu nutzen, Wasser zu verdampfen und den erzeugten Dampf im Reformer, zusammen mit dem rezirkulierten Rauchgas und dem Brennstoff, zur Erzeugung des Synthesegases einzusetzen.

In der US 2016/186992 A1 wird eine Vorrichtung umfassend einen Synthesegasreaktor und einen Ofen beschrieben. Im Synthesegasreaktor werden Wasserdampf und vorbeheiztes Erdgas zu einem Synthesegas reformiert. Das Synthesegas wird im Ofen mit einem sauerstoffreichen Oxidationsmittel verbrannt. Die dabei entstehende Abwärme wird zur Beheizung des Synthesegasreaktors sowie des diesem zugeführten Wasserdampfs eingesetzt.

In der EP 3 447 025 A1 wird ein thermochemisches Verfahren beschrieben, bei dem in einem Ofen ein Synthesegas mit Sauerstoff unter Entstehung eines heißen Abgases verbrannt und ein Teilstrom des Abgases zusammen mit einem Kohlenwasserstoff enthaltenden Brennstoff einem Reformer zugeführt wird. Im Reformer werden Brennstoff und der Teilstrom des Abgases in einer endothermen Reaktion zu Synthesegas umgesetzt, das anschließend als Brennstoff dem Ofen zugeführt wird. Zusätzlich zum Brennstoff und dem rezirkulierten Abgas wird dem Reformer als Edukt Sauerstoff zugeführt, wobei im Fall von Methan als Brennstoff beispielsweise folgende Reaktion abläuft ("Tri-Reformierung"):

| | | |
|---|---|---|
| (d) | ${CH}_{4} + \frac{1}{4} {CO}_{2} + \frac{1}{2} {H}_{2} O + \frac{1}{8} {O}_{2} {←}_{\to } \frac{5}{4} CO + \frac{5}{2} {H}_{2}$ | ΔH⁰_{R} = +156,2 MJ/kmol |

Der zugeführte Sauerstoff verhindert insbesondere die Bildung von Kohlenstoffablagerungen im Reformer und erhöht dadurch die Effizienz des Verfahrens.

Derartige Verfahren haben sich bewährt, insbesondere, wenn durch Einsatz eines Katalysators im Reformer, beispielsweise Nickel auf einem Trägermaterial aus Aluminiumoxid (Ni/Al₂O₃), stabilere Prozessbedingungen geschaffen und durch die Herabsetzung der Aktivierungsenergie ein Start der endothermen chemischen Reaktion bei geringeren Temperaturen erreicht werden kann. Hierbei hat sich jedoch herausgestellt, dass bei vielen Anwendungen schwefelhaltige Abgase entstehen, die dem Einsatz eines Katalysators abträglich sind. Insbesondere beim Einsatz in Glasschmelzöfen ist Schwefel nicht nur in vielen Rohstoffen, sondern auch in häufig verwendeten Flussmitteln vorhanden.

Es ist daher die Aufgabe der vorliegenden Erfindung, das beschriebene thermochemische Verfahren zur regenerativen/rekuperativen Wärmerückgewinnung dahingehend zu verbessern, dass im Reformer eine Anreicherung von bei der Verbrennung entstehenden und für den Prozess schädlichen Stoffen, insbesondere von Schwefel oder Schwefelverbindungen, möglichst vermieden wird.

Gelöst ist diese Aufgabe durch ein Verfahren mit den Merkmalen des Patentanspruchs 1 und durch eine Vorrichtung mit den Merkmalen des Patentanspruchs 7. Vorteilhafte Ausgestaltungen der Erfindung werden in den Unteransprüchen angegeben.

Im Unterschied zu Verfahren nach dem Stande der Technik wird beim erfindungsgemäßen Verfahren das Abgas aus dem Ofen lediglich für die Wärmeübertragung genutzt und im Anschluss vollständig in die Umgebung abgeführt und nicht in einem Teilstrom in den Reformer zurückgeführt. Der für die Reformierungsreaktion benötigte Wasserdampf wird aus Wasser erzeugt, das aus einer Zuleitung herangeführt, in einem indirekten Wärmetauscher (Rekuperator) unter Einsatz von innerer Energie des Ofenabgases verdampft und anschließend dem Reformer zugeführt wird. Abgas und Edukte der Reformierungsreaktion sind also stofflich streng voneinander getrennt. Dadurch gelangen auch keine Verunreinigungen aus den Ofenabgasen, wie insbesondere Schwefelverbindungen, in den Reformer, die die Funktionsfähigkeit eines dort vorliegenden Katalysators beeinträchtigen könnten. Lediglich die innere Energie des Abgases wird als Energiequelle für die Reformierungsreaktion im Reformer genutzt.

Im Reformer wird der kohlenwasserstoffhaltige Brennstoff, beispielsweise Methan, mit dem Wasserdampf und Sauerstoff zur Reaktion gebracht. Dabei entsteht das überwiegend aus Wasserstoff und Kohlenmonoxid bestehende Synthesegas. Im Unterschied zu den oben beschriebenen Verfahren der "Bi-Reformierung" und der "Tri-Reformierung" wird beim erfindungsgemäßen Verfahren dem Reformer also kein Kohlendioxid zugeführt, sondern externer Wasserdampf, und es findet eine an die Dampfreformierung angelehnter Prozess statt:

| | | |
|---|---|---|
| (e) | CH₄ + H₂O ⇆ CO + 3 H₂ | ΔH⁰_{R} = +206,2 MJ/kmol |

Bei höheren Temperaturen tritt zusätzlich noch die Wassergas-Shift-Reaktion auf:

| | | |
|---|---|---|
| (f) | H₂O + CO ⇆ CO₂ + H₂ | ΔH⁰_{R} = -41,2 MJ/kmol |

Bei einer zusätzlichen Zugabe von Sauerstoff in den Reformer erfolgt zudem eine partielle Oxidation von Brennstoffanteilen. Dabei entsteht auch CO₂. Dieses wird durch Trockenreformierung ebenfalls in Wasserstoff und Kohlenmonoxid umgewandelt. Durch die partielle Oxidation sinkt die Reaktionsenthalpie. Dies reduziert die für die endotherme Reformierungsreaktion benötigte Energie, sodass insgesamt eine höhere Temperatur im Reformer erzielt wird. Zudem wird die Neigung zur Bildung von Kohlenstoffablagerungen im Reformer erheblich reduziert. Der Sauerstoff wird dem Reformer bevorzugt in Form eines sauerstoffhaltigen Gases zugeführt.

| | | |
|---|---|---|
| (g) | CH₄ + ½ O₂ → CO + 2 H₂ | ΔH⁰_{R} = -35,9 MJ/kmol |

Als "sauerstoffhaltiges Gas" im Reformer, wie auch als "sauerstoffhaltiges Oxidationsmittel" im Ofen, kommt erfindungsgemäß jeweils ein Gas mit einem Sauerstoffanteil zum Einsatz, der gleich oder größer als der Sauerstoffanteil von Luft ist. Bevorzugt handelt es sich sowohl beim sauerstoffhaltigen Gas als auch beim sauerstoffhaltigen Oxidationsmittel um Sauerstoff mit einer Reinheit von 95 Vol.-% und mehr (im Folgenden auch als "reiner Sauerstoff" bezeichnet). Sofern im Reformer und im Ofen das gleiche sauerstoffhaltige Gas zum Einsatz kommt, kann dieses einer gemeinsamen Quelle entnommen werden, beispielsweise einem Tank oder einer Rohrleitung; es können jedoch auch sauerstoffhaltige Gase unterschiedlicher Zusammensetzung und/oder Herkunft im Reformer und im Ofen zum Einsatz kommen.

Zusätzlich zum Verdampfen des Wassers kann die innere Energie des Abgases dazu genutzt werden, den Brennstoff und/oder das sauerstoffhaltige Gas vor dessen/deren Zuführung an den Reformer zu erwärmen. Die Übertragung von innerer Energie aus dem Abgas erfolgt dabei an indirekten Wärmetauschern (Rekuperatoren), die in den jeweiligen Zuleitungen stromauf zum Reformer angeordnet sind. Bei der Verdampfung des dem Reformer zuzuführenden Wassers wird der entstehende Wasserdampf durch die Abgaswärme zweckmäßigerweise auf einen gesättigten oder überhitzten Zustand gebracht.

Ergänzend zur vorgenannten Nutzung der Abgaswärme zum Beheizen der Edukte der Reformierungsreaktion sieht eine besonders vorteilhafte Ausgestaltung der Erfindung vor, einen Teil der inneren Energie des Abgases direkt auf die im Reformer anwesenden Reaktionspartner der Reformierungsreaktion zu übertragen. Dies erfolgt an einer im Reformer angeordneten Wärmetauscherfläche, bei der es sich beispielsweise um die Rohre eines im Reformer angeordneten, vom Abgas durchströmten Wärmetauschers handelt oder einen anderen indirekten Wärmetauscher, der eine kontinuierliche Beheizung des Reformers durch Ofenabgas und damit eine rekuperative Fahrweise erlaubt.

Bevorzugt beträgt die Reaktionstemperatur im Reformer, oder, im Falle eines mehrteiligen Reformers, die Temperatur in wenigstens einem Reaktor oder funktionalen Abschnitt des Reformers, zwischen 700°C und 900°C, besonders bevorzugt zwischen 750°C und 800°C. Die Temperatur im Reformer wird - bei ansonsten gleichbleibender Zuführung von Wärme - insbesondere durch die Verhältnisse der Mengenströme der Edukte im Reformer beeinflusst und kann durch diese entsprechend eingestellt werden.

Die Stoffmengenströme der dem Reformer zugeführten Edukte, also Brennstoff, Wasserdampf und sauerstoffreiches Gas, werden in Abhängigkeit von der vorliegenden Abgastemperatur so gewählt, dass einerseits eine möglichst hohe Umsetzung des Brennstoffs in Synthesegas erfolgt, andererseits die Bildung von Kohlenstoffablagerungen im Reaktor vermieden und eine möglichst hohe Reaktionsenthalpie erzielt wird. Die Reformierung von Methan mit Wasserdampf gemäß Gleichung (e) wird üblicherweise mit einem Wasserüberschuss durchgeführt, um Kohlenstoffbildung zu vermeiden. Dies führt aber zu einer "Verwässerung" des zu produzierenden Synthesegases und in weiterer Folge zu einer verminderten Erhöhung des feuerungstechnischen Wirkungsgrades. Die Zugabe von Sauerstoff zu den Edukten ermöglicht es, den Wasseranteil in Abhängigkeit der vorliegenden Abgastemperatur derart zu senken, dass eine kohlenstofffreie Betriebsweise mit gleichzeitig hohem Ausbeutegrad an CO und H₂ erzielt werden kann.

Bevorzugt beträgt das Verhältnis der molaren Mengenströme im Falle eines überwiegend aus Methan bestehenden Brennstoffs, wie beispielsweise Erdgas, [ṅ(CH₄)/ṅ(O₂)/ṅ(H₂O)] = [1/0 - 0,6/0,5 -1,5], wobei ein Verhältnis der molaren Mengenströme [ṅ(CH₄)/ṅ(O₂)/ṅ(H₂O)] = [1/0,1 - 0,5/0,6 - 1,2] zu besonders günstigen Ergebnissen führt. Bevorzugt beträgt der Sauerstoffanteil an den dem Reformer zugeführten Edukten zwischen 0 und 25 Vol.-%. Bei Sauerstoffanteilen darüber hinaus überwiegt die Verbrennung, und dem Ofen wird ein mit hohen Anteilen von Kohlendioxid und Wasserdampf angereichertes Synthesegas zugeführt.

Durch Einbau eines Katalysators im Reformer können stabilere Prozessbedingungen geschaffen und die Aktivierungsenergie der chemischen Reaktion herabgesetzt werden, wodurch ein Start der endothermen chemischen Reaktion bei geringeren Temperaturen erreicht wird. Hierbei können insbesondere Katalysatoren der Eisen-, Kobalt-, Nickel- oder Platingruppe herangezogen werden, wobei vorteilhafterweise Nickel-Katalysatoren verwendet werden, beispielsweise ein Katalysator in Form einer Schüttung aus Nickel auf einem Träger aus Aluminiumoxid (Ni/Al₂O₃). Dies erleichtert die Durchführung der endothermen chemischen Reaktion bei einer Temperatur zwischen 700°C und 900°C.

Eine erfindungsgemäße Vorrichtung zum Rückgewinnen von innerer Energie aus heißen Abgasen umfasst einen Reformer, der mit einer Zuleitung für einen Brennstoff, sowie mit einer Zuleitung für ein sauerstoffhaltiges Gas ausgerüstet ist, einen Ofen, der mit einer Zuleitung für ein sauerstoffhaltiges Oxidationsmittel und einer Abgasleitung zum Abführen von Abgas aus dem Ofen ausgerüstet ist, eine den Reformer mit dem Ofen verbindenden Zuleitung zum Zuführen eines im Reformer erzeugten Synthesegases in den Ofen und wenigstens einen Wärmetauscher (Wärmeübertrager) zum Übertragen von innerer Energie aus dem Abgas auf Reaktionsprodukte im Reformer, wobei die Abgasleitung mit einem Verdampfer thermisch verbunden ist, der mit einer von der Abgasleitung strömungstechnisch getrennten Wasserzuleitung und mit einer in den Reformer mündenden Zuleitung für Wasserdampf strömungsverbunden ist und der eine Wärmetauscherfläche zum Verdampfen des über die Wasserzuleitung herangeführten Wassers durch Wärmekontakt mit dem aus der Abgasleitung herangeführten Abgas aufweist.

Die insbesondere zur Durchführung des erfindungsgemäßen Verfahrens bestimmte Vorrichtung weist also keinen Teilkreislauf des im Ofen erzeugten Abgases auf; vielmehr verlässt das Abgas das System und gelangt vollständig, ggf. nach Durchlaufen einer Reinigungsstufe, über einen Kamin in die Außenatmosphäre oder wird einer sonstigen Verwendung außerhalb des thermochemischen Prozesses zugeführt. Das zur Reformierungsreaktion erforderliche Wasser wird über die von der Abgasleitung strömungstechnisch getrennte Wasserzuleitung herangeführt, im Verdampfer mittels der inneren Energie des Abgases verdampft und als vorzugsweise überhitzter Wasserdampf dem Reformer zugeführt.

Darüber hinaus können in der Abgasleitung weitere indirekte Wärmetauscher zum Beheizen von dem Reformer zuzuführendem Brennstoff und/oder sauerstoffreichem Gas vorgesehen sein. Im Reformer wird aus dem Wasserdampf, dem Brennstoff und Sauerstoff ein Synthesegas erzeugt, das anschließend im Ofen mit einem Oxidationsmittel unter Entstehung des Abgases verbrannt wird.

Vorzugsweise ist im Reformer ein Wärmetauscher angeordnet, der eine Übertragung von innerer Energie aus dem Abgas auf die im Reformer vorliegenden Reaktionsprodukte erlaubt.

Dabei kann es sich beispielsweise um eine im Reformer vorgesehene Schüttung (Regeneratorbett) handeln, die in einer ersten Betriebsphase vom Abgas beströmt und dadurch aufgeheizt wird (Regeneration) und in einer nachfolgenden Betriebsphase die aufgenommene Wärme an die Reaktionspartner der endothermen Reformierungsreaktion abgibt (Reformierung). In diesem Falle umfasst der Reformer zwei bevorzugt baugleiche Reaktoren, die abwechselnd als Regenerator und als Reformer betrieben werden. Allerdings hat diese Fahrweise den Nachteil, dass sich im Laufe der Zeit unerwünschte Bestandteile der Ofenatmosphäre, wie beispielsweise Schwefel oder Schwefelverbindungen im Reformer ansammeln und in weiterer Folge insbesondere den Katalysator schädigen können.

Eine gegenüber einer solchen regenerativen Fahrweise bevorzugte Variante der Erfindung sieht jedoch vor, dass der Reformer als Rekuperator betrieben wird. Beim Betrieb als Rekuperator ist im Reformer ein indirekter Wärmetauscher vorgesehen, der vom Ofenabgas durchströmt wird und an einer Wärmetauscherfläche innere Energie vom Ofenabgas auf die Reaktionsprodukte im Reformer abgibt, ohne dass es zu einer stofflichen Vermischung von Ofenabgasen und Reaktionsprodukten kommt. Beispielsweise handelt es sich bei dem Rekuperator um einen Rohrbündelwärmetauscher, bei dem das heiße Ofenabgas durch Röhren geführt wird, die sich durch einen mit den Reaktionsprodukten der Reformierungsreaktion beschickten Mantelraum erstrecken. Es sind aber auch andere Rekuperatortypen denkbar, wie beispielsweise ein Spaltrekuperator, oder ein Rohrkorb-Rekuperator oder eine Kombination mehrerer Rekuperatortypen. Im Übrigen kann bei dieser Ausgestaltung zusätzlich eine beispielsweise elektrische Heizeinrichtung vorgesehen sein, mittels der der Reformer beheizt und somit das Gemisch auf Reaktionstemperatur gebracht werden kann. Eine Heizeinrichtung kann auch im Verdampfer vorgesehen sein, um den Verdampfungsvorgang anzufahren oder zu unterstützen.

In einer vorteilhaften Ausgestaltung der Erfindung handelt es sich beim Reformer um einen mehrteiligen Reformer, bei dem die Reformierungsreaktion in mehreren Schritten in nacheinander geschalteten Reaktoren oder funktionalen Abschnitten des Reformers erfolgt. In oder zwischen zumindest einem Teil der einzelnen Reaktoren oder funktionalen Abschnitte können dabei Wärmetauscher vorgesehen sein, in denen ein Teil der inneren Energie des Abgases auf die im jeweiligen Reaktor oder funktionalen Abschnitt anwesenden Reaktionspartner übertragen wird. Zudem kann Wasserdampf und/oder das sauerstoffhaltige Gas (Reinsauerstoff) auch in Teilströmen über entsprechende Zuleitungen den einzelnen Reaktoren oder funktionalen Abschnitten des Reformers zugeführt werden.

In einer abermals vorteilhaften Ausgestaltung der Erfindung ist eine mit den Zuführungen wirkverbundene Steuerung inkludiert, mittels der die Stoffmengenströme der Edukte der Reformierungsreaktion im Reformer variiert werden können. Die Steuerung umfasst beispielsweise eine elektronische Steuereinheit, die mit in den Zuleitungen der Edukte angeordneten Ventilen datenverbunden ist und mittels der die Mengenströme von Brennstoff, sauerstoffreichem Gas und Wasserdampf nach einem vorgegebenen Programm oder in Abhängigkeit von gemessenen Parametern eingestellt werden können. Als gemessene Parameter kommen insbesondere die Temperatur(en) der Edukte oder Produkte vor, während oder nach dem Durchlaufen des Reformers, beispielsweise der Temperatur des Ofenabgases oder des zugeführten Wasserdampfs oder Sauerstoffs, oder etwa die Zusammensetzung des Synthesegases in Betracht. Sofern ein mehrteiliger Reformer zum Einsatz kommt, können insbesondere auch Temperaturen der Edukte oder Produkte vor, während oder nach einer oder mehreren Stufen des Reformierungsprozesses Grundlage der Regelung der zuzuführenden Mengenströme sein.

Das erfindungsgemäße Verfahren, bzw. die erfindungsgemäße Vorrichtung ermöglicht es, den feuerungstechnischen Wirkungsgrad von als Oxyfuel-Anlagen betriebenen Öfen mit mittleren bis hohen Abgastemperaturen zwischen 700°C und 1700°C um bis zu 25% zu steigern. Das Verfahren ist insbesondere für Glasschmelzöfen oder sonstige für Hochtemperaturanwendungen eingesetzte Ofenanlagen geeignet; insbesondere bei Glasschmelzöfen verhindert es Probleme mit beim Schmelzprozess entstehenden und über das Abgas des Ofens abgeführten Säurebildnern oder Halogenverbindungen, wie beispielsweise Schwefel-, Chlor- oder Fluorverbindungen.

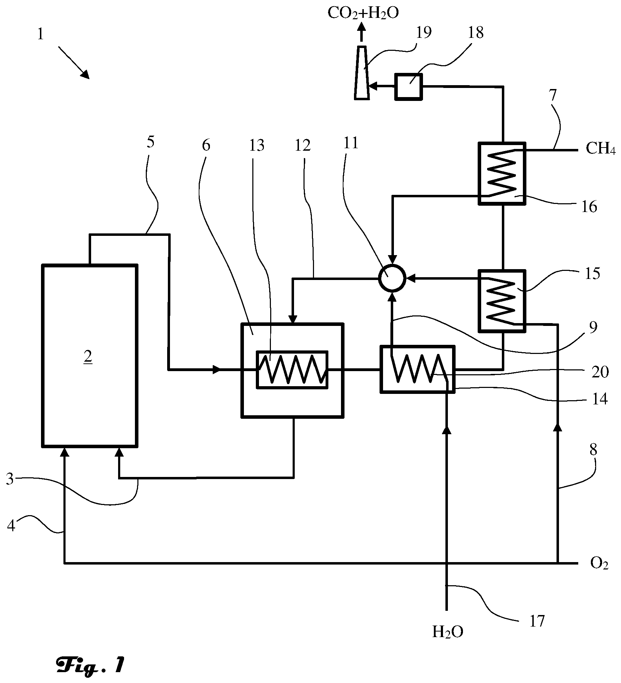

Anhand der Zeichnung soll ein Ausführungsbeispiel der Erfindung näher erläutert werden. Die einzige Zeichnung (Fig. 1) zeigt schematisch ein Diagramm der Betriebsweise einer erfindungsgemäßen Vorrichtung.

Die in Fig. 1 gezeigte Vorrichtung 1 umfasst einen Ofen 2, beispielsweise einen Glasschmelzofen, der mit einer Zuleitung 3 für ein Synthesegas und einer Zuleitung 4 für ein Oxidationsmittel, sowie mit einer Abgasleitung 5 zum Abführen des im Ofen 2 bei der Verbrennung des Synthesegases mit dem Oxidationsmittel erzeugten Abgases ausgerüstet ist. Das Synthesegas wird in einem Reformer 6 erzeugt, der über die Zuleitung 3 mit dem Ofen 2 strömungsverbunden ist. Der Reformer 6 steht mit einer Zuleitung 7 für einen kohlenwasserstoffhaltigen Brennstoff, wie beispielsweise Methan, Erdgas, Heizöl o.ä., mit einer Zuleitung 8 für ein sauerstoffhaltiges Gas und einer Zuleitung 9 für Wasserdampf in Strömungsverbindung.

Als sauerstoffreiches Gas kommt im hier gezeigten Ausführungsbeispiel das gleiche Gas zum Einsatz, das im Ofen 2 als Oxidationsmittel verwendet wird, beispielsweise Sauerstoff mit einer Reinheit von 95 Vol.-% oder darüber. Aus diesem Grund sind die Zuleitungen 4, 8 miteinander verbunden und an einer hier nicht gezeigten gemeinsamen Quelle, beispielsweise einem Sauerstofftank oder einer Rohrleitung, angeschlossen; es ist jedoch auch vorstellbar, dass unterschiedliche sauerstoffhaltige Gase im Ofen 2 und im Reformer 6 zum Einsatz kommen; in diesem Fall sind die Zuleitungen 4, 9 an unterschiedlichen Quellen angeschlossen.

Die Zuleitungen 7, 8, 9 münden im hier gezeigten Ausführungsbeispiel gemeinsam in einen Mischer 11, von dem aus eine gemeinsame Zuleitung 12 das Gasgemisch in den Reformer 6 transportiert; im Rahmen der Erfindung ist jedoch auch vorstellbar, dass die Zuleitungen 7, 8, 9 direkt in den Reformer 6 einmünden.

Um die Effizienz der im Reformer 6 ablaufenden Reaktion zu erhöhen, ist dieser in hier nicht gezeigter Weise mit einem Katalysator ausgerüstet, bei dem es sich beispielsweise um Nickel handelt, das auf einem inerten, in Form von Schüttgut vorliegendem Trägermaterial aufgebracht ist.

Im Betrieb der Vorrichtung 1 wird im Reformer 6 aus den Edukten Methan, Sauerstoff und Wasserdampf in einer endothermen Reformierungsreaktion ein Kohlenmonoxid und Wasserstoff enthaltendes Synthesegas erzeugt, das über die Zuleitung 3 dem Ofen 2 zugeführt und im Ofen 2 mit dem über die Zuleitung 4 herangeführten Oxidationsmittel verbrannt wird. Die dabei entstehenden Abgase werden über die Abgasleitung 5 abgeführt. Sie enthalten Kohlendioxid und Wasserdampf, können jedoch noch weitere Bestandteile, wie beispielsweise Sauerstoff enthalten. Die Temperatur der Abgase beträgt beispielsweise 1000°C bis 1650°C, bevorzugt 1400°C bis 1500°C.

Um die Wärme des Abgases nutzen zu können, durchläuft die Abgasleitung 5 stromab zum Ofen 2 eine Reihe von Wärmetauschern 13, 14, 15, 16, bei denen es sich jeweils beispielsweise um einen Röhren-, Spalt- oder Rohrkorbrekuperator handelt. In einem ersten Wärmetauscher 13 erfolgt im Reformer 6 an einer Wärmetauscherfläche ein Wärmekontakt zwischen dem durch die Abgasleitung 5 geführten Abgas mit den Reaktionsprodukten, wodurch zumindest ein Teil der für die endotherme Reformierungsreaktion erforderliche Wärme bereitgestellt wird. Die kontinuierliche Zuführung von Wärme aus dem Abgas an die Wärmetauscherfläche im Wärmetauscher 13 ermöglicht den Betrieb des Reformers 6 als Rekuperator. Das immer noch heiße Abgas wird anschließend einem Verdampfer 14 zugeführt. Im Verdampfer 14 befindet sich eine Wärmetauscherfläche 20, an der zumindest ein Teil der im Abgas vorhandenen inneren Energie auf Wasser übertragen wird, das über eine Wasserzuleitung 17 zum Verdampfer 14 gefördert wird. Das Wasser verdampft an der Wärmetauscherfläche 20 und wird anschließend in Form von überhitztem Wasserdampf über die Zuleitung 9 in den Reformer 6 eingeleitet. Optional durchläuft das Abgas anschließend Wärmetauscher 15, 16, in denen eine Vorwärmung der beiden übrigen Edukte Sauerstoff und Brennstoff erfolgt.

In keinem der Wärmetauscher 13, 14, 15, 16 kommt es dabei zur stofflichen Vermischung von Abgas aus der Abgasleitung mit einem der in den Zuleitungen 7, 8, 9, 17 geförderten Medien; vielmehr wird das in den Wärmetauschern 13, 15, 16 und dem Verdampfer 14 gekühlte Abgas aus der Abgasleitung 7 nach Durchlaufen einer Reinigungsstufe 18 über einen Kamin 19 in die Umgebungsatmosphäre abgelassen oder einer sonstigen Verwendung zugeführt.

Die Stoffmengenströme der über die Zuleitungen 7, 8, 9 herangeführten Edukte können mittels einer hier nicht gezeigten Steuerung variiert und den Verhältnissen angepasst werden, um beispielsweise eine möglichst vollständige Umsetzung des Brennstoffs im Reformer 6 zu bewirken und gleichzeitig die Neigung zur Bildung von Kohlenstoffablagerungen zu verringern, bzw. ganz zu verhindern.

Aufgrund der strömungstechnischen Trennung zwischen Ofenabgas einerseits und den Edukten der Reformierungsreaktion andererseits wird bei der Vorrichtung 1 zuverlässig verhindert, dass sich schädliche Bestandteile des Abgases, beispielsweise Schwefelverbindungen, im Reformer ansammeln und dort zu Schädigungen, beispielsweise des Katalysatorbetts, führen. Durch die Übertragung von innerer Energie aus dem Ofenabgasen auf die Reaktionsprodukte der Reformierungsreaktion an den Wärmetauschern 13, 15, 16 und dem Verdampfer 14 wird gleichwohl ein hoher energetischer Wirkungsgrad erzielt.

### Bezugszeichenliste

- 1.: Vorrichtung
- 2.: Ofen
- 3.: Zuleitung
- 4.: Zuleitung
- 5.: Abgasleitung
- 6.: Reformer
- 7.: Zuleitung (für Brennstoff)
- 8.: Zuleitung (für Sauerstoff)
- 9.: Zuleitung (für Wasser)
- 10.: -
- 11.: Mischer
- 12.: Gemeinsame Zuleitung
- 13.: Wärmetauscher
- 14.: Verdampfer
- 15.: Wärmetauscher
- 16.: Wärmetauscher
- 17.: Wasserzuleitung
- 18.: Reinigungsstufe
- 19.: Kamin
- 20.: Wärmetauscherfläche

## Patentansprüche

1. Verfahren zum Rückgewinnen von innerer Energie aus heißen Abgasen, bei dem ein Kohlenwasserstoff enthaltender Brennstoff und Wasserdampf einem Reformer (6) zugeführt wird, in welchem in einer endothermen Reformierungsreaktion ein Kohlenmonoxid und Wasserstoff enthaltendes Synthesegas erzeugt wird, das Synthesegas anschließend einem Ofen (2) zugeführt wird, in dem es mit einem Sauerstoff enthaltendem Oxidationsmittel verbrannt wird, wobei ein heißes, Kohlendioxid und Wasserdampf enthaltendes Abgas entsteht, und die im Abgas enthaltene innere Energie zumindest teilweise zur Durchführung der endothermen Reformierungsreaktion im Reformer (6) genutzt wird,
wobei das Abgas vollständig abgeführt und der in der Reformierungsreaktion eingesetzte Wasserdampf aus Wasser erzeugt wird, das aus einer Zuleitung (17) herangeführt, in einem Verdampfer (14) unter Einsatz von inneren Energie des Abgases verdampft und anschließend dem Reformer (6) zugeführt wird, **dadurch gekennzeichnet,**
**dass** dem Reformer (6) ein sauerstoffhaltiges Gas zugeführt wird, das in der Reformierungsreaktion zur Erzeugung des Synthesegases eingesetzt wird, und als Brennstoff ein zumindest überwiegend aus Methan bestehender Brennstoff zum Einsatz kommt und das Verhältnis der Mengenströme der dem Reformer (6) für die Reformierungsreaktion zugeführten Edukte [ṅ(CH4)/ṅ(O2)/ṅ(H2O)] = [1/0-0,6/0,5-1,5] beträgt.

2. Verfahren nach Anspruch 1, **dadurch gekennzeichnet, dass** innere Energie des Abgases aus dem Ofen (2) zumindest teilweise zum Beheizen des Brennstoffs und/oder des Wasserdampfs und/oder des sauerstoffhaltigen Gases vor dessen/deren jeweiliger Zuführung an den Reformer (6) eingesetzt wird.

3. Verfahren nach einem der vorhergehenden Ansprüche, **dadurch gekennzeichnet, dass** die innere Energie des Abgases aus dem Ofen (2) zumindest teilweise an einem im Reformer (6) angeordneten Wärmetauscher (13) auf die im Reformer (6) anwesenden Reaktionspartner der Reformierungsreaktion erfolgt.

4. Verfahren nach einem der vorhergehenden Ansprüche, **dadurch gekennzeichnet, dass** die Reaktionstemperatur im Reformer, oder in einem Reaktor oder einem funktionalen Teilabschnitt des Reformers, zwischen 700°C und 900°C, bevorzugt zwischen 750°C und 800°C beträgt.

5. Verfahren nach einem der vorhergehenden Ansprüche, **dadurch gekennzeichnet, dass** als Brennstoff ein zumindest überwiegend aus Methan bestehender Brennstoff zum Einsatz kommt und das Verhältnis der Mengenströme der dem Reformer (6) für die Reformierungsreaktion zugeführten Edukte [ṅ(CH₄)/ṅ(O₂)/ṅ(H₂O)] = [1/0,1-0,5/0,6-1,2] beträgt.

6. Verfahren nach einem der vorhergehenden Ansprüche, **dadurch gekennzeichnet, dass** im Reformer (6) ein Katalysator der Eisen-, Kobalt-Nickel- oder Platingruppe vorgesehen ist.

7. Vorrichtung zur Durchführung eines Verfahrens nach einem der vorhergehenden Ansprüche, mit einem an eine Zuleitung (7) für einen kohlenwasserstoffhaltigen Brennstoff und eine Zuleitung (8) für Sauerstoff angeschlossenen Reformer (6), mit einem Ofen (2), der mit einer Zuleitung (4) für ein sauerstoffhaltiges Oxidationsmittel und mit einer Abgasleitung (5) zum Abführen von Abgas aus dem Ofen (2) ausgerüstet ist, und mit einer den Reformer (6) mit dem Ofen (2) verbindenden Zuleitung (3) zum Zuführen eines im Reformer (6) erzeugten Synthesegases in den Ofen (2), sowie mit wenigstens einem Wärmetauscher (13, 15, 16) zum Übertragen von innerer Energie des Abgases auf Reaktionsprodukte im Reformer (6),
wobei
die Abgasleitung (5) mit einem Verdampfer (14) thermisch verbunden ist, der mit einer von der Abgasleitung (5) strömungstechnisch getrennten Wasserzuleitung (17) und mit einer in den Reformer (6) mündenden Zuleitung (9,12) für Wasserdampf strömungsverbunden ist und eine Wärmetauscherfläche (20) zum Verdampfen des über die Wasserzuleitung (17) herangeführten Wassers durch Wärmekontakt mit dem aus der Abgasleitung (5) herangeführten Abgas aufweist.

8. Vorrichtung nach Anspruch 7, **dadurch gekennzeichnet, dass** im Reformer (6) ein Wärmetauscher (13) zum Übertragen von innerer Energie aus dem Abgas auf die im Reformer (6) vorliegenden Reaktionsprodukte vorgesehen ist.

9. Vorrichtung nach Anspruch 8, **dadurch gekennzeichnet, dass** im Reformer (6) ein an die Abgasleitung (5) angeschlossener indirekter Wärmetauscher (13) vorgesehen ist, an dem die Reaktionsprodukte der Reformierungsreaktion im Reformer (6) kontinuierlich mit dem Abgas aus dem Ofen (2) in thermischen Kontakt bringbar sind.

10. Vorrichtung nach einem der Ansprüche 7 bis 9, **dadurch gekennzeichnet, dass** als Reformer (6) ein aus einer Mehrzahl von Reaktoren und/oder funktionalen Abschnitten bestehender mehrteiliger Reformer zum Einsatz kommt, wobei die Reaktoren und/oder funktionalen Abschnitte zumindest teilweise mit einem Wärmetauscher (13) zum Übertragen von innerer Energie aus dem Abgas auf die jeweiligen Reaktionsprodukte und/oder mit einer Zuleitung (12) für Wasserdampf und/oder einer Zuleitung (4) für sauerstoffhaltiges Oxidationsmittel ausgerüstet sind.

11. Vorrichtung nach einem der Ansprüche 7 bis 10, **gekennzeichnet durch** eine mit den Zuführungen (7, 8, 9) wirkverbundene Steuerung, mittels der die Mengenströme der Edukte der Reformierungsreaktion im Reformer (6) variiert werden können.

12. Vorrichtung nach einem der Ansprüche 7 bis 11, **dadurch gekennzeichnet, dass** der Ofen (2) ein Glasschmelzofen ist.

## Claims

1. Process for recovering internal energy from hot exhaust gases in which a hydrocarbon-containing fuel and steam are fed to a reformer (6), in which a synthesis gas containing carbon monoxide and hydrogen is produced in an endothermic reforming reaction and the synthesis gas is then fed to a furnace (2), in which it is combusted with an oxygen-containing oxidizing agent, wherein a hot exhaust gas containing carbon dioxide and steam is produced, and the internal energy contained in the exhaust gas is at least partially used to carry out the endothermic reforming reaction in the reformer (6), wherein the exhaust gas is completely discharged and the steam used in the reforming reaction is generated from water which is supplied from a feed line (17), evaporated in an evaporator (14) using internal energy of the exhaust gas and is then fed to the reformer (6), **characterized in that**
an oxygen-containing gas is fed to the reformer (6), which is used in the reforming reaction to generate the synthesis gas, and a fuel consisting at least predominantly of methane is used as fuel and the ratio of the mass flows of the reactants fed to the reformer (6) for the reforming reaction is [ṅ(CH4)/ṅ(O2)/ṅ(H2O)] = [1/0-0.6/0.5-1.5].

2. Process according to Claim 1, **characterized in that** internal energy of the exhaust gas from the furnace (2) is at least partially used for heating the fuel and/or the steam and/or the oxygen-containing gas prior to the respective feeding thereof to the reformer (6).

3. Process according to either of the preceding claims, **characterized in that** the internal energy of the exhaust gas from the furnace (2) is at least partially transferred to the reactants of the reforming reaction present in the reformer (6) in a heat exchanger (13) arranged in the reformer (6).

4. Process according to any of the preceding claims, **characterized in that** the reaction temperature in the reformer, or in a reactor or a functional section of the reformer, is between 700°C and 900°C, preferably between 750°C and 800°C.

5. Process according to any of the preceding claims, **characterized in that** a fuel consisting at least predominantly of methane is used as fuel and the ratio of the mass flows of the reactants fed to the reformer (6) for the reforming reaction is [ṅ(CH₄)/ṅ(O₂)/ṅ(H₂O)] = [1/0.1-0.5/0.6-1.2].

6. Process according to any of the preceding claims, **characterized in that** a catalyst from the group of iron, cobalt, nickel or platinum is provided in the reformer (6).

7. Device for performing a process according to any of the preceding claims, having a reformer (6) connected to a feed line (7) for a hydrocarbon-containing fuel and a feed line (8) for oxygen, having a furnace (2) which is equipped with a feed line (4) for an oxygen-containing oxidizing agent and with an exhaust gas line (5) for discharging exhaust gas from the furnace (2), and with a feed line (3) connecting the reformer (6) to the furnace (2) for feeding a synthesis gas produced in the reformer (6) into the furnace (2), and with at least one heat exchanger (13, 15, 16) for transferring internal energy of the exhaust gas to reaction products in the reformer (6),
wherein
the exhaust gas line (5) is thermally connected to an evaporator (14), which is fluidically connected to a water feed line (17) fluidically separated from the exhaust gas line (5) and to a feed line (9, 12) for steam opening into the reformer (6), and has a heat exchanger surface (20) for evaporating the water supplied via the water feed line (17) by thermal contact with the exhaust gas supplied from the exhaust gas line (5).

8. Device according to Claim 7, **characterized in that** a heat exchanger (13) is provided in the reformer (6) for transferring internal energy from the exhaust gas to the reaction products present in the reformer (6).

9. Device according to Claim 8, **characterized in that** an indirect heat exchanger (13) connected to the exhaust gas line (5) is provided in the reformer (6), at which the reaction products of the reforming reaction in the reformer (6) can be brought continuously into thermal contact with the exhaust gas from the furnace (2).

10. Device according to any of Claims 7 to 9, **characterized in that** a multi-part reformer consisting of a plurality of reactors and/or functional sections is used as the reformer (6), wherein the reactors and/or functional sections are at least partially equipped with a heat exchanger (13) for transferring internal energy from the exhaust gas to the respective reaction products and/or with a feed line (12) for steam and/or a feed line (4) for oxygen-containing oxidizing agent.

11. Device according to any of Claims 7 to 10, **characterized by** a control system operatively connected to the feeds (7, 8, 9), by means of which the mass flows of the reactants of the reforming reaction in the reformer (6) can be varied.

12. Device according to any of Claims 7 to 11, **characterized in that** the furnace (2) is a glass melting furnace.

## Revendications

1. Procédé de récupération d'énergie interne à partir de gaz d'échappement chauds, dans lequel un combustible contenant des hydrocarbures et de la vapeur d'eau sont amenés à un reformeur (6), dans lequel un gaz de synthèse contenant du monoxyde de carbone et de l'hydrogène est produit dans une réaction de reformage endothermique, le gaz de synthèse est ensuite amené à un four (2), dans lequel il est brûlé avec un agent oxydant contenant de l'oxygène, des gaz d'échappement chauds contenant du dioxyde de carbone et de la vapeur d'eau se formant, et l'énergie interne contenue dans les gaz d'échappement est utilisée au moins en partie pour réaliser la réaction de reformage endothermique dans le reformeur (6),
les gaz d'échappement étant complètement évacués et la vapeur d'eau employée dans la réaction de reformage étant produite à partir d'eau qui arrive depuis une conduite d'arrivée (17), est évaporée dans un évaporateur (14) en employant de l'énergie interne des gaz d'échappement, puis est amenée au reformeur (6),
**caractérisé en ce**
**qu'**est amené au reformeur (6) un gaz contenant de l'oxygène, qui est employé dans la réaction de reformage pour produire le gaz de synthèse, et un combustible constitué au moins majoritairement de méthane est employé comme combustible et le rapport des débits massiques des produits de départ amenés au reformeur (6) pour la réaction de reformage étant de [ṅ(CH4)/ṅ(O2)/ṅ(H2O)] = [1/0-0,6/0,5-1,5].

2. Procédé selon la revendication 1, **caractérisé en ce que** de l'énergie interne des gaz d'échappement du four (2) est employée au moins en partie pour chauffer le combustible et/ou la vapeur d'eau et/ou le gaz contenant de l'oxygène avant son amenée respective au reformeur (6).

3. Procédé selon l'une des revendications précédentes, **caractérisé en ce que** l'énergie interne des gaz d'échappement provenant du four (2) est produite au moins en partie sur un échangeur de chaleur (13) disposé dans le reformeur (6) sur les partenaires de réaction de la réaction de reformage présents dans le reformeur (6).

4. Procédé selon l'une des revendications précédentes, **caractérisé en ce que** la température de réaction dans le reformeur, ou dans un réacteur ou une sous-section fonctionnelle du reformeur, est comprise entre 700 °C et 900 °C, de manière préférée entre 750 °C et 800 °C.

5. Procédé selon l'une des revendications précédentes, **caractérisé en ce qu'**un combustible constitué au moins majoritairement de méthane est employé en tant que combustible et le rapport des débits massiques des produits de départ amenés au reformeur (6) pour la réaction de reformage est de [ṅ(CH₄)/ṅ(O₂)/ṅ(H₂O)] = [1/0,1-0,5/0,6-1,2].

6. Procédé selon l'une des revendications précédentes, **caractérisé en ce qu'**un catalyseur du groupe du fer, du cobalt, du nickel ou du platine est prévu dans le reformeur (6).

7. Dispositif pour la mise en œuvre d'un procédé selon l'une des revendications précédentes, avec un reformeur (6) raccordé à une conduite d'arrivée (7) d'un combustible contenant des hydrocarbures et à une conduite d'arrivée (8) d'oxygène, avec un four (2), qui est équipé d'une conduite d'arrivée (4) d'un agent oxydant contenant de l'oxygène et d'une conduite de gaz d'échappement (5) destinée à évacuer des gaz d'échappement du four (2), et avec une conduite d'arrivée (3) reliant le reformeur (6) au four (2) destinée à amener un gaz de synthèse produit dans le reformeur (6) dans le four (2), ainsi qu'avec au moins un échangeur de chaleur (13, 15, 16) destiné à transférer de l'énergie interne des gaz d'échappement à des produits de réaction dans le reformeur (6),
la conduite de gaz d'échappement (5) étant reliée thermiquement à un évaporateur (14), qui est en communication fluidique avec une conduite d'arrivée d'eau (17) séparée de la conduite de gaz d'échappement (5) selon la technique de communication fluidique et avec une conduite d'arrivée (9, 12) de vapeur d'eau débouchant dans le reformeur (6) et qui comporte une surface (20) d'échangeur de chaleur pour l'évaporation de l'eau arrivant par la conduite d'arrivée d'eau (17) par contact thermique avec les gaz d'échappement arrivant depuis la conduite de gaz d'échappement (5).

8. Dispositif selon la revendication 7, **caractérisé en ce qu'**est prévu dans le reformeur (6) un échangeur de chaleur (13) pour transférer de l'énergie interne provenant des gaz d'échappement aux produits de réaction présents dans le reformeur (6).

9. Dispositif selon la revendication 8, **caractérisé en ce qu'**est prévu dans le reformeur (6) un échangeur de chaleur indirect (13) raccordé à la conduite de gaz d'échappement (5), sur lequel les produits de réaction de la réaction de reformage dans le reformeur (6) peuvent être amenés en contact thermique en continu avec les gaz d'échappement provenant du four (2).

10. Dispositif selon l'une des revendications 7 à 9, **caractérisé en ce qu'**est employé comme reformeur (6) un reformeur en plusieurs parties constitué d'une multitude de réacteurs et/ou de sections fonctionnelles, les réacteurs et/ou les sections fonctionnelles étant au moins en partie équipés d'un échangeur de chaleur (13) pour transférer de l'énergie interne provenant des gaz d'échappement aux produits de réaction respectifs et/ou d'une conduite d'arrivée (12) de vapeur d'eau et/ou d'une conduite d'arrivée (4) d'un agent oxydant contenant de l'oxygène.

11. Dispositif selon l'une des revendications 7 à 10, **caractérisé par** une commande en liaison fonctionnelle avec les arrivées (7, 8, 9), au moyen de laquelle les débits massiques des produits de départ de la réaction de reformage dans le reformeur (6) peuvent varier.

12. Dispositif selon l'une des revendications 7 à 11, **caractérisé en ce que** le four (2) est un four de fusion de verre.
